(19) Europäisches Patentamt / European Patent Office / Office européen des brevets

(11) **EP 3 684 824 B1**

(12) **EUROPEAN PATENT SPECIFICATION**

(45) Date of publication and mention of the grant of the patent:
**26.02.2025 Bulletin 2025/09**

(21) Application number: **18765906.5**

(22) Date of filing: **13.09.2018**

(51) International Patent Classification (IPC):
**C08F 2/34** (2006.01)  **C08F 2/00** (2006.01)
**C08F 10/06** (2006.01)  **C08F 4/651** (2006.01)
**C08F 4/654** (2006.01)

(52) Cooperative Patent Classification (CPC):
(C-Sets available)
**C08F 210/06;** C08F 2410/02  (Cont.)

(86) International application number:
**PCT/EP2018/074705**

(87) International publication number:
**WO 2019/057595 (28.03.2019 Gazette 2019/13)**

(54) **PROCESS FOR GAS-PHASE POLYMERIZATION OF OLEFINS**

VERFAHREN ZUR GASPHASENPOLYMERISIERUNG VON OLEFINEN

PROCÉDÉ DE POLYMÉRISATION EN PHASE GAZEUSE D'OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2017 EP 17192309**

(43) Date of publication of application:
**29.07.2020 Bulletin 2020/31**

(73) Proprietor: **Basell Poliolefine Italia S.r.l.**
**20121 Milano (IT)**

(72) Inventors:
• **MAZZUCCO, Antonio**
**44122 Ferrara (IT)**
• **BALESTRA, Enrico**
**44122 Ferrara (IT)**
• **PANTALEONI, Roberto**
**44122 Ferrara (IT)**
• **TARTARI, Davide**
**44122 Ferrara (IT)**
• **RINALDI, Riccardo**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 1 720 913**  **EP-A1- 2 281 010**
**EP-A2- 0 251 100**  **WO-A1-2006/067052**
**WO-A1-2018/177701**  **US-A1- 2009 149 610**
**US-A1- 2011 152 424**  **US-A1- 2011 184 131**

Remarks:
The file contains technical information submitted after the application was filed and not included in this specification

(52) Cooperative Patent Classification (CPC): (Cont.)

C-Sets
**C08F 110/06, C08F 4/6492;**
**C08F 210/06, C08F 2/001;**
**C08F 210/06, C08F 2/34;**

**C08F 210/06, C08F 4/6543;**
C08F 110/06, C08F 2500/12, C08F 2500/15,
C08F 2500/17;
C08F 210/06, C08F 210/16, C08F 2500/12,
C08F 2500/15, C08F 2500/17

**Description**

FIELD OF THE INVENTION

The present disclosure relates to a gas-phase process for the polymerization of olefins. In particular, the present disclosure relates to a gas-phase process for the polymerization of ole-fins carried out in a reactor having two interconnected polymerization zones.

BACKGROUND OF THE INVENTION

The development of Ziegler-Natta olefin polymerization catalysts having high activity and selectivity, has led to the widespread use on an industrial scale of processes in which the polymerization of olefins is carried out in a gaseous medium in the presence of a solid catalyst.

A widely used technology for gas-phase polymerization processes is the fluidized bed technology. In fluidized bed gas-phase processes, the polymer is confined in a vertical cylindrical zone, the so-called polymer bed. The reaction gases exiting the reactor are taken up by a compressor, cooled and sent back, together with make-up monomers and appropriate quantities of hydrogen, to the bottom of the polymer bed through a distribution plate. Entrainment of solid from the gas exiting the reactor is limited by an appropriate design of the upper part of the reactor termed the "freeboard" (i.e. the space between the upper bed surface and the gas exit point) and, in some designs, by the interposition of cyclones in the gases exit line. The flow rate of the circulating gaseous monomers is set so as to assure a velocity within an adequate range above the minimum fluidization velocity and below the "transport velocity". The heat of reaction is removed exclusively by cooling the circulating gas. The composition of the gas-phase controls the composition of the polymer, while the reaction kinetics is controlled by the addition of inert gases.

Since fluidized bed reactors approximate very closely to the ideal behavior of a "continuous stirred-tank reactor" (CSTR), it is very difficult to obtain products which are a homogeneous mixture of different types of polymeric chains. In fact, the composition of the gaseous mixture that is in contact with the growing polymer particle is essentially the same for all the residence time of the particle in the reactor.

The patent application US2009/149610A1 discloses the polymerization of olefins in a gas phase reactor with spouted beds. Polymer particles are circulated through a riser part in the middle of a reactor tube and a downcomer.

The patent application US2011/184131A1 discloses the polymerization of olefins in a circulating gas phase reactor including a riser for contacting the catalyst and a first gas composition comprising an olefin to form a polyolefin and a downer for contacting the catalyst and a second gas composition comprising an olefin to form additional polyolefin, and a transport section for conveying the polymerization mixture from the downer to the riser.

The patent application US2011/152424A1 exemplifies the polymerization of olefins in a polymerization reactor in which there is a riser section operated under dilute fast-fluidization regime and a downcomer section operated under a packed-moving-bed regime, wherein both reactor sections are run with the same gas composition and very similar pressure.

A gas-phase process for the olefin polymerization, which represents a gas-phase technology alternative to the fluidized bed reactor technology, is disclosed in Applicant's earlier patent EP1012195B1. This polymerization process, called multizone circulating reactor (MZCR), is carried out in a gas-phase reactor having two interconnected polymerization zones. The polymer particles flow upwards through a first polymerization zone, denominated "riser", under fast fluidization or transport conditions, leave said riser and enter a second polymerization zone, denominated "downcomer", through which they flow in a densified form under the action of gravity. A continuous circulation of polymer is established between the riser and the downcomer.

According to the description of EP1012195B1 it is possible to obtain, within the polymerization apparatus disclosed therein, two polymerization zones with different composition by feeding a gas/liquid stream, denominated "barrier stream", to the upper part of the downcomer. The gas/liquid stream acts as a barrier to the gas phase coming from the riser, and is capable of establishing a net gas flow upward in the upper portion of the downcomer. The established flow of gas upward has the effect of preventing the gas mixture present in the riser from entering the downcomer.

The polymerization process, described in detail in EP1012195B1, is particularly useful for preparing, in a single reactor, broad molecular weight olefin polymers and, particularly, multimodal olefin polymers, whereby the term "multimodal" refers to the modality of the molecular weight distribution. As used in the art, and also used herein, multimodal shall include bimodal. Such polymers can be obtained from polymerizing olefins in a cascade of two or more polymerization reactors or in different zones of a MZCR reactor under different reaction conditions. Thus, the "modality" indicates how many different polymerization conditions were utilized to prepare the polyolefin, independently of whether this modality of the molecular weight distribution can be recognized as separated maxima in a gel permeation chromatography (GPC) curve or not. In addition to the molecular weight distribution, the olefin polymer can also have a comonomer distribution. In an embodiment the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight or monomodal olefin polymers.

While the feeding of liquid in the barrier stream at the top of the downcomer is desirable for improving the flowability of polymer particles, when the flow rate of liquid exceeds certain values it becomes problematic. In fact, the quick evaporation of the liquid inside the downcomer may generate an upward flow of vapor, locally capable of fluidizing the polymer particles, thus interrupting the regular plug flow of the polymer along the downcomer. These local fluidization conditions give the undesired effect of making the residence time of the particles non-homogeneous inside the downcomer. This problem has been recognized and addressed in WO 2009/080660.

The patent document EP2281010A1 discloses a polymerization process carried out in a multizone circulating reactor (MZCR) wherein a gas recycle stream is withdrawn from the riser, subject to cooling below its dew point and then returned to the riser, the process being characterized in that the gas recycle stream is cooled at a temperature of 0.05-3°C below its dew point.

The patent document EP1720913A1 discloses a method for controlling the flowability of polymer particles flowing downward in a densified form inside a polymerization reactor, preferably a multizone circulating reactor (MZCR).

The international patent application WO2018/177701A1 discloses a process for the preparation of a heterophasic propylene polymer composition comprising a random propylene copolymer and an elastomeric propylene copolymer on a multizone circulating reactor (MZCR), wherein the concentration of comonomer in the downcomer is higher than in the riser, so that the random propylene copolymer is prepared in the riser and the elastomeric propylene copolymer is prepared in the downcomer.

A process for producing heterophasic propylene polymers in a multizone circulating reactor (MZCR) is described also in the international patent application WO2006/067052A1.

The operation stability of a MZCR and its production rate are affected by a variety of factors. Among others, the temperature profile along the downcomer plays an important role. The temperature profile is linked to the reactor temperature at the riser outlet, which is controlled via heat removal. That in turn defines the temperature of the upper part of the downcomer; therefore the downcomer bottom temperature will depend on the production rate and the solid circulation. High temperatures at any positions in the downcomer can jeopardize the operation of the reactor by fouling, sheeting and the ultimate blockage of the discharge valve(s), resulting in a shut down. The maximum acceptable temperature depends on the characteristics of the individual grades. The riser temperature is typically kept at least 5°C higher than the dew point of the reactor gas mixture at the MZCR operating pressure. At these conditions, for all products and at all production rates, the riser operates in dry mode. The polymer particles are transferred from the bottom of the riser to the downcomer by means of a gas flow with no presence of condensate.

It is desirable to provide an improved process for polymerizing olefins in a MZCR having an increased production rate and/or enhanced reliability, i.e. that can be operated smoothly for long periods without shut-downs, in particular when producing highly critical grades.

SUMMARY OF THE INVENTION

The present disclosure provides a process for the polymerization of olefins in gas phase carried out in a reactor having two interconnected polymerization zones, a first zone named the "riser" and a second zone named the "downcomer", wherein the growing polymer particles:

(a) flow through the riser under fast fluidization conditions established by feeding a mixture of gas and liquid;

(b) leave the riser and enter the downcomer, through which they flow downward in a densified form;

(c) leave the downcomer and are reintroduced into the riser, thus establishing a circulation of polymer between the riser and the downcomer;

and wherein the reactor is operated at a temperature which is between 0°C and 5°C above the dew point of the riser gas at the operating pressure; and wherein further in the riser, besides the growing polymer particles and gas flow, an amount of liquid is also present.

BRIEF DESCRIPTION OF THE DRAWINGS

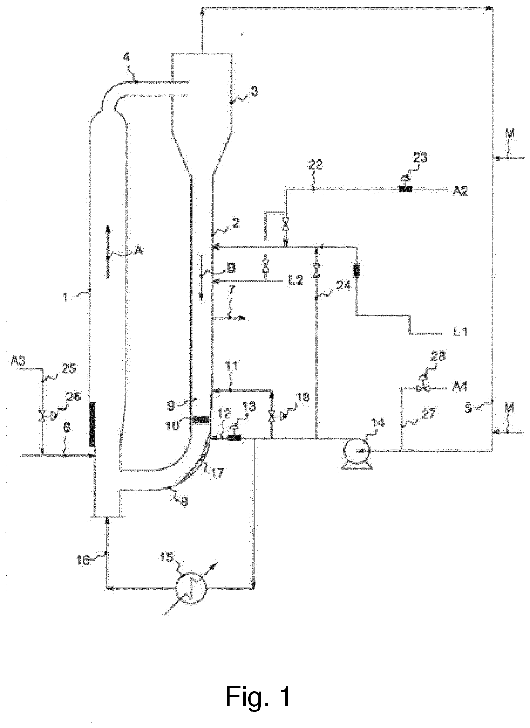

Figure 1 depicts schematically a set-up of a gas-phase MZCR having two interconnected polymerization zones for carrying out the polymerization process of the present disclosure, without restricting the invention to the embodiments illustrated therein.

DETAILED DESCRIPTION OF THE INVENTION

In embodiments, the MZCR is operated at a pressure and a temperature such that an amount of liquid is present in the whole riser or in a significant portion of the riser. In this latter embodiment, an amount of liquid is present from the bottom to a certain height of the riser, such as up to 75% of the height or up to 50% of the height, no liquid being present respectively above 75% or 50% of the height of the riser. In those embodiments in which an amount of liquid is present in the whole riser, an amount of liquid may also be present in the upper part of the downcomer.

In embodiments, the pressure of operation of the MZCR is comprised between 5 and 40 bar-g, or between 10 and 35 bar-g, or still between 20 and 30 bar-g.

In embodiments, the temperature of operation of the MZCR is comprised between 40 and 120 °C, or between 45 and 100 °C, or between 50 and 85 °C, or between 55 and 70 °C.

In embodiments, the difference between the temperature of operation of the reactor and the dew point of the gas in the reactor is comprised between 0.5°C and 4°C, or between 1°C and 3°C.

In the first polymerization zone (riser), fast fluidization conditions are established by feeding a mixture of gas and liquid comprising one or more alpha-olefins at a velocity higher than the transport velocity of the polymer particles. The gas velocity within the riser is generally comprised between 0.5 and 15 m/s, preferably between 0.8 and 5 m/s. The terms "transport velocity" and "fast fluidization conditions" are well known in the art; for a definition thereof, see, for example, "D. Geldart, Gas Fluidisation Technology, page 155 et seq., J. Wiley & Sons Ltd., 1986".

In the second polymerization zone (downcomer), the polymer particles flow under the action of gravity in a densified form, so that high values of density of the solid (mass of polymer per volume of reactor) are achieved, said density of solid approaching the bulk density of the polymer. Throughout the present description a "densified form" of the polymer implies that the ratio between the mass of polymer particles and the reactor volume is higher than 80% of the "poured bulk density" of the obtained polymer. The "poured bulk density" of a polymer is a parameter well known to the person skilled in the art. In view of the above, it is clear that in the downcomer the polymer flows downward in a plug flow and only small quantities of gas are entrained with the polymer particles.

According to the process of the present disclosure, the two interconnected polymerization zones can be operated in such a way that the fluid mixture coming from the riser is totally or partially prevented from entering the downcomer by introducing into the upper part of the downcomer a liquid and/or gas stream, denominated the "barrier stream", having a composition different from the gaseous mixture present in the riser. That way of operation can be achieved by placing one or more feeding lines for the barrier stream in the downcomer close to the upper limit of the volume occupied by the polymer particles flowing downward in a densified form.

This liquid/gas mixture fed into the upper part of the downcomer partially replaces the fluid mixture entrained with the polymer particles entering the downcomer. The partial evaporation of the liquid in the barrier stream generates in the upper part of the downcomer a flow of gas, which moves counter-currently to the flow of descendent polymer, thus acting as a barrier to the fluid mixture coming from the riser and entrained among the polymer particles. The liquid/gas barrier fed to the upper part of the downcomer can be sprinkled over the surface of the polymer particles: the evaporation of the liquid will provide the required upward flow of gas.

The feed of the barrier stream causes a difference in the concentrations of monomers and/or hydrogen (molecular weight regulator) inside the riser and the downcomer, so that a bimodal polymer can be produced.

It is known that in a gas-phase polymerization process the reaction mixture comprises, besides the gaseous monomers, inert polymerization diluents and chain transfer agents, such as hydrogen, useful for regulating the molecular weight of the resulting polymeric chains. The polymerization diluents are preferably selected from $C_2$-$C_8$ alkanes, preferably propane, isobutane, isopentane and hexane. Propane is preferably used as the polymerization diluent in the gas-phase polymerization of the invention, so that liquid propane is unavoidably contained in the barrier stream, which is fed to the upper part of the downcomer.

In one embodiment, the barrier steam comprises:

i. from 10 to 100% by mol of propylene;

ii. from 0 to 80% by mol of ethylene;

iii. from 0 to 30% by mol of propane; and

iv. from 0 to 5% by mol of hydrogen.

The above indicated compositions of barrier stream can be obtained from the condensation of a part of the fresh monomers and propane, said condensed part being fed to the upper part of the downcomer in a liquid form. According to an embodiment, the above compositions of the barrier stream derive from the condensation and/or distillation of part of a gaseous stream continuously recycled to the reactor having two interconnected polymerization zones.

Additional liquid and/or gas of the composition can be fed along the downcomer at a point below the barrier stream.

The recycle gas stream is generally withdrawn from a gas/solid separator placed downstream of the riser, cooled by passage through an external heat exchanger and then recycled to the bottom of the riser. Of course, the recycle gas stream comprises, besides the gaseous monomers, also the inert polymerization components, such as propane, and chain transfer agents, such as hydrogen. Moreover, the composition of the barrier stream deriving from condensation and/or distillation of the gas recycle stream may be suitably adjusted by feeding liquid make-up monomers and propane before its introduction into the upper part of downcomer.

Condensate is normally present at the cooler gas discharge because by removal of reaction heat part of the recirculation gas is condensed. However, this condensate is completely vaporized once it enters the riser bottom and is contacted with the hot recirculating solid flow from the downcomer bottom. This is not the case in the process of the present disclosure, operating at a riser temperature close to the dew point. After the gas flow is contacted with the hot recirculating solid flow, some condensate remains unvaporized and is entrained in the upper part of the riser in a three-phase flow regime.

Experimental evidence has shown that, at given operating conditions in the MZCR, a controlled decrease of the MZCR operating temperature up to values at or close to the condensation point of the riser gas, so to obtain a controlled amount of condensate at the riser bottom, does not negatively affect the reactor operation both in the riser and in the downcomer. Moreover, a lower temperature profile in the downcomer is obtained which improves the polymer flowability, thus increasing the solid recirculation and, in turn, causing a further reduction of the temperature profile. This is evident for polymer grades with a low softening temperature but also for polymer grades which are sensitive to electrostatic charges. In fact, the presence of condensate in the reactor, if properly dispersed on the polymer particles does act as an antistatic. The maximum allowable operating temperature at the bottom of the downcomer depends mainly on the product structure; once that is known, the solid recirculation defines the maximum allowable production rate for the MZCR. As a consequence, a higher temperature difference between the riser and the downcomer bottom temperature can be translated into a higher throughput. Therefore it is evident that, once a proper maximum operating temperature is identified for a specific grade, higher delta T's and therefore higher production rates can be achieved in the downcomer simply by decreasing the riser (control) temperature of the reactor within a certain range from the dew point.

From a reliability standpoint, being able to operate critical grades at high capacity with an overall temperature of the MZCR which is further away from the critical temperature range for those products allows for a more stable reactor operation and less risk that process issues appear in case of upsets.

The process of the present disclosure will now be described in detail with reference to the enclosed Figure 1, which is a diagrammatic representation and has to be considered illustrative and not limitative of the scope of the invention.

The polymerization reactor shown in Figure 1 comprises a first polymerization zone 1 (riser), wherein the polymer particles flow upward under fast fluidization conditions along the direction of the arrow A and a second polymerization zone 2 (downcomer), wherein the polymer particles flow downward under the action of gravity along the direction of the arrow B.

The upper portion of the riser 1 is connected to a solid/gas separator 3 by the interconnection section 4. The separator 3 removes the major part of the unreacted monomers from the polymer particles and the polymer withdrawn from the bottom of separator 3 enters the top portion of the downcomer 2. The separated unreacted monomers, optionally together with polymerization diluents, such as propane, flow up to the top of separator 3 and are successively recycled to the bottom of the riser 1 via the recycle line 5.

A mixture comprising one or more olefin monomers, hydrogen as the molecular weight regulator and propane as the polymerization diluent, is fed to the polymerization reactor via one or more lines M, which are suitably placed along the gas recycle line 5, according to the knowledge of the person skilled in the art.

The catalyst components, optionally after a prepolymerization step, are continuously introduced into the riser 1 via line 6. The produced polymer can be discharged from the reactor via a line 7, which can be placed on the lower portion of the downcomer 2 so that, due to the packed flow of densified polymer, the quantity of gas entrained with the discharged polymer is minimized. By inserting a control valve (not shown) on the polymer discharge line 7, it becomes possible to continuously control the flow rate of polymer produced by the polymerization reactor. Additional polymer discharge lines can be placed in the bottom part of the downcomer (not shown).

The polymerization reactor further comprises a transport section 8 connecting the bottom of downcomer 2 with the lower region of the riser 1. The bottom of the downcomer 2 converges into a slight restriction 9. A control valve 10 with an adjustable opening can be placed within the restriction 9. The flow rate (Fp) of polymer continuously circulated between the downcomer 2 and the riser 1 is adjusted by the level of opening of the control valve 10. The control valve 10 may be a mechanical valve, such as a butterfly valve, a ball valve, *etc.* A stream of dosing gas is fed into the lower part of the downcomer 2 by means of a line 11 placed at a short distance above the restriction 9. The dosing gas to be introduced through line 10 can be taken from the recycle line 5. In synthesis, the Fp of polymer particles circulated between downcomer 2 and riser 1 can be adjusted by varying the opening of the control valve 10 at the bottom of the downcomer and/or by varying the flow rate of the dosing gas entering the downcomer via line 11. The flow rate of dosing gas is adjusted by means of a control valve 18, which is suitably arranged on line 11.

The transport section 8 is designed as a bend descending from the bottom of downcomer 2 up to the lower region of the riser 1. Furthermore, a carrier gas is introduced via line 12 at the inlet of the transport section 8. The flow rate of carrier gas is adjusted by means of a control valve 13, which is suitably arranged on line 12.

The carrier gas can also be taken from the gas recycle line 5. Specifically, the gas recycle stream of line 5 is first subjected to compression by means of a compressor 14 and a minor percentage of the recycle stream passes through line 12, thus entering the transport section 8 and diluting the solid phase of polymer flowing through the transport section 8. The major part of the recycle stream, downstream of the compressor 14, is subjected to cooling in a heat exchanger 15 and successively is introduced via line 16 at the bottom of the riser 1 at a high velocity, such as to ensure fast fluidization conditions in the polymer bed flowing along the riser 1.

The carrier gas merges with the densified polymer coming from downcomer 2 at the inlet portion of transport section 8, after exiting the slits of the gas distribution grid 17. In the embodiment shown in Figure 1, the top end of the distribution grid 17 is coincident with the inlet of the transport section 8, and the distribution grid 17 extends along the bending of the transport section 8 for an angle $\alpha=60°$. The gas distribution grid 17 is formed by a plurality of trays fixed to the transport section 8 in a way to form slits in the overlapping area of adjacent trays. A detailed description of the gas distribution grid 17 can be found in WO 2012/031986.

Hydrogen and the comonomer(s) ethylene and/or a $C_4$-$C_{10}$ alpha-olefin are pre-dispersed either in the liquid monomer L1 and/or L2 as described above or, alternatively, in a fraction of recycle gas taken from recycle line 5 via line 24, and then fed to the reactor (flow rate A2, line 22 metered by one or more valves 23).

As described in WO 2011/029735, flow rates of antistatic compositions may be fed into the reactor at the bottom of the riser (flow rate A3, line 25 metered by valve 26) or into the main gas recycle line 5 (flow rate A4, line 27 metered by valve 28).

The polymerization reactor can be operated by properly adjusting the polymerization conditions and the concentration of monomers and hydrogen in the riser and in the downcomer, so as to tailor or tune the obtainable products. To this purpose, the fluid mixture entraining the polymer particles and coming from the riser can be partially or totally prevented from entering the downcomer, so as to polymerize different monomer compositions in the riser and the downcomer. This effect may be achieved by feeding a gaseous and/or liquid barrier stream through a line placed in the upper portion of the downcomer. The barrier stream should have a composition different from the fluid composition present in the riser. The flow rate of the barrier stream can be adjusted, so that an upward flow of gas counter-current to the flow of the polymer particles is generated, particularly at the top of the downcomer, thus acting as a barrier to the fluid mixture coming from the riser. For further details regarding this barrier effect at the top of the downcomer, reference is made to the disclosure of EP 1012195 A1.

According to an embodiment, the MZCR can be placed upstream or downstream of one or more other polymerization reactors based on conventional liquid- and/or gas-phase technologies, thus giving rise to a sequential multistage polymerization process. For instance, a fluidised bed reactor can be used to prepare a first polymer component, which is successively fed to the gas-phase reactor of Figure 1 to prepare a second and a third polymer component.

In case of one or more additional gas phase reactors (GPRs) downstream of the MZCR, experimental evidence has shown that the reactivity ratio of the downstream reactor increases significantly when operating the MZCR at a temperature at or close to the dew point, as the catalyst arrives in the downstream reactor more active due to the lower thermal profile of the MZCR. This implies that heterophasic copolymers can be produced at higher rates at existing plants if operating the MZCR at a controlled temperature close to the condensation point, since it is possible to better exploit the increased catalyst reactivity inside the GPR. On the other hand, for new plant designs, smaller GPRs can be foreseen for given capacities, with evident savings on installation and maintenance costs (CAPEX) and operation costs (OPEX).

The process of the present disclosure can be carried out by using customary olefin polymerization catalysts, particularly titanium-based Ziegler-Natta-catalysts, Phillips catalysts based on chromium oxide, and single-site catalysts. For the purposes of the present disclosure, single-site catalysts are catalysts based on chemically uniform transition metal coordination compounds, such as metallocene catalysts. Furthermore, it is also possible to use mixtures of two or more different catalysts. Such mixed catalyst systems may be designated as hybrid catalysts.

According to an embodiment, the process of the present disclosure can be carried out in the presence of Ziegler-Natta catalysts comprising:

    i. a solid catalyst component comprising Mg, Ti, an halogen and an electron donor compound (internal donor),

    ii. an alkylaluminum compound, and

    iii. optionally, an electron-donor compound (external donor).

Component (i) can be prepared by contacting a magnesium halide, a titanium compound having at least a Ti-halogen bond, and optionally an electron donor compound. The magnesium halide can be $MgCl_2$ in active form which is widely known from the patent literature as a support for Ziegler-Natta catalysts. The titanium compounds can be $TiCl_4$ or $TiCl_3$. Ti-haloalcoholates of formula $Ti(OR)_{n-y}X_y$, where n is the valence of titanium, y is a number between 1 and n-1 X is halogen and R is a hydrocarbon radical having from 1 to 10 carbon atoms, can also be used.

Electron donor compounds for preparing Ziegler type catalysts are for example alcohols, glycols, esters, ketones, amines, amides, nitriles, alkoxysilanes and aliphatic ethers. These electron donor compounds can be used alone or in mixtures with other electron donor compounds.

Other solid catalyst components which may be used are those based on a chromium oxide supported on a refractory oxide, such as silica, and activated by a heat treatment. Catalysts obtainable from those components consist of chromium (VI) trioxide chemically fixed on silica gel. These catalysts are produced under oxidizing conditions by heating the silica gels that have been doped with chromium(III)salts (precursor or precatalyst). During this heat treatment, the chromium(III) oxidizes to chromium(VI), the chromium(VI) is fixed and the silica gel hydroxyl group is eliminated as water.

Still other solid catalyst components which may be used are single-site catalysts supported on a carrier, such as metallocene catalysts, comprising:

i. at least a transition metal compound containing at least one n bond; and

ii. at least a cocatalyst selected from an alumoxane or a compound able to form an alkyl-metallocene cation.

According to embodiments of the disclosure, when the catalyst includes an alkylaluminum compound, such as in Ziegler-Natta catalysts, the molar ratio of solid catalyst component to alkylaluminum compound introduced into the polymerization reactor is from 0.05 to 3, or from 0.1 to 2, or from 0.5 to 1.

The catalysts may be optionally subjected to prepolymerization before being fed to the polymerization reactor. In an embodiment the prepolymerization occurs in a loop reactor. The prepolymerization of the catalyst system may be carried out at a low temperature, in a range of from 0°C to 60°C.

Conventional additives, fillers and pigments, commonly used in olefin polymers, may be added, such as nucleating agents, extension oils, mineral fillers, and other organic and inorganic pigments. In particular, the addition of inorganic fillers, such as talc, calcium carbonate and mineral fillers also brings about an improvement to some mechanical properties, such as flexural modulus and HDT. Talc can also have a nucleating effect.

The nucleating agents are added to the compositions of the present disclosure in quantities ranging from 0.05 to 2% by weight, more preferably from 0.1 to 1% by weight, with respect to the total weight, for example.

EXAMPLES

The following examples are given to illustrate the present disclosure without any limiting purpose.

**Test Methods**

Melt flow rate (MFR "L")

Determined according to ISO 1133 (230°C, 2.16 Kg)

$^{13}$C NMR of propylene/ethylene copolymers

$^{13}$C NMR spectra were acquired on a Bruker AV-600 spectrometer equipped with a cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-d2 at 120°C with a 8 % wt/v concentration. Each spectrum was acquired with a 90° pulse, with 15 seconds of delay between pulses and CPD to remove $^1$H-$^{13}$C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethylaluminum chloride" M. Kakugo, Y. Naito, K. Mizunuma and T. Miyatake, Macromolecules, 1982, 15, 1150) using the following equations:

$$PPP = 100 \; T\beta\beta/S \qquad PPE = 100 \; T\beta\delta/S \qquad EPE = 100 \; T\delta\delta/S$$

$$PEP = 100 \; S\beta\beta/S \qquad PEE = 100 \; S\beta\delta/S \qquad EEE = 100 \; (0.25 \; S\gamma\delta + 0.5 \; S\delta\delta)/S$$

$$S = T\beta\beta + T\beta\delta + T\delta\delta + S\beta\beta + S\beta\delta + 0.25 \; S\gamma\delta + 0.5 \; S\delta\delta$$

The molar percentage of ethylene content was evaluated using the following equation:

$$E\% \; mol = 100 * [PEP + PEE + EEE]$$

The weight percentage of ethylene content was evaluated using the following equation:

$$E\% \; wt. = \frac{100 * E\% \; mol * MWE}{E\% \; mol * MWE + P\% \; mol * MWP}$$

where P% mol is the molar percentage of propylene content, while MWE and MWP are the molecular weights of ethylene and propylene, respectively.

Xylene-Soluble Fraction (XS)

The xylene-soluble fraction (XS) was measured according to ISO 16152:2005, but with the following deviations:

- the volume of the polymer solution was 250 mL instead of 200 mL;
- the precipitation stage was carried out at 25°C for 30 minutes, but for the final 10 minutes the polymer solution was kept under stirring by a magnetic stirrer instead of no stirring at all; and
- the final drying step was done under vacuum at 70°C instead of 100 °C.

The XS is expressed as a weight percentage of the original 2.5 grams of polymer.

Intrinsic Viscosity of Xylene Soluble Fraction (XSIV)

Determined in tetrahydronaphthalene at 135°C.

**Examples 1 (inventive) and 1C (comparison)**

Preparation of the Ziegler-Natta solid catalyst component

The Ziegler-Natta catalyst was prepared according to Example 5, lines 48-55, of the European Patent EP728769B1.

Preparation of the Catalyst System - Precontact

Before introducing it into the polymerization reactors, the solid catalyst component described above is contacted with aluminum-triethyl (TEAL) and with the dicyclopentyldimethoxysilane (D donor) under the conditions reported in Table 1.

Prepolymerization

The catalyst system is then subject to prepolymerization treatment at 20°C by maintaining it in suspension in liquid propylene for a residence time of 7 minutes before introducing it into the polymerization reactor.

Polymerization

The polymerization was carried out in a MZCR, *i.e.* a polymerization reactor comprising two interconnected polymerization zones, a riser and a downcomer, as described in European Patent EP782587. Propylene was polymerized to obtain a crystalline propylene homopolymer Hydrogen was used as molecular weight regulator. While in Example 1C the MZCR temperature is controlled at a typical value of 73°C, Example 1 was carried out at a much lower temperature of 68.5°C, only 1.5°C above the condensation point of the riser gas. The polymer particles exiting from the reactor were subjected to a steam treatment to remove the unreacted monomers and dried under a nitrogen flow.

The main precontact, prepolymerization and polymerization conditions and the quanti-ties of monomers and hydrogen fed to the polymerization reactor are reported in Table 1. Characterization data for the obtained polymers are reported in Table 2.

While in Example 1C no condensate was present in the gas flowing through the riser after contact with the hot recirculating solid flow, for Example 1 it can be calculated that about 4% by weight of condensate was entrained in the upper part of the riser together with the solid particles. Nonetheless, both riser and downcomer operations were very stable throughout the experiment.

The downcomer bottom temperatures stabilized at much lower values. Also, when operating at 68.5°C, it was possible to achieve a higher solid recirculation flow rate compared to Example 1C, which also contributed in a much lower overall downcomer temperature. In fact, for this grade, operating the downcomer with a lower temperature profile showed a beneficial effect in terms of powder flowability.

For this critical grade, operation at downcomer bottom temperatures close to or above the range of 93-95°C has been known to cause process issues (agglomerates formations). The lower downcomer temperature profile obtained by operating at MZCR temperature of 68.5°C (thus with a maximum downcomer temperature of 86°C) has greatly reduced the risk of agglomerates formation and therefore has an evident positive impact on reactor reliability.

**Examples 2 (inventive) and 2C (comparison)**

Preparation of the Ziegler-Natta Solid Catalyst Component - Preparation of the Catalyst System - Precontact - Prepolymerization

As in Examples 1 and 1C.

Polymerization

The polymerization was carried out in a sequence of two gas-phase reactors: a first reactor being a MZCR and a second reactor being a fluidized-bed reactor. In the first reactor propylene was polymerized to obtain a crystalline polypropylene (matrix). The polymer obtained in the first reactor was continuously discharged via line 7, separated from the gas into a gas/solid separator and introduced in the second reactor. In the second reactor ethylene and propylene were copolymerized to obtain an amorphous rubber. The same product was prepared in the two examples, with the only difference that in Example 2 the MZCR temperature was controlled close to the condensation point of the riser gas (2°C above). In both reactors hydrogen was used as molecular weight regulator. The polymer particles exiting from the second reactor were subjected to a steam treatment to remove the unreacted monomers and dried under a nitrogen flow.

As in the previous examples, also for this product a stable MZCR operation was achieved with a calculated 3% by weight of condensate entrained in the upper part of the riser together with the solid particles. The downcomer bottom temperature was decreased by as much as 11°C compared to typical conditions, while no significant change in polymer flowability was observed for this very high MFR powder (a grade with already excellent MZCR flowability). In the GPR, an evident increase in reactivity ratio (based on specific mileage) has been observed (+65%); in order to produce the same polymer quantity, the GPR residence time was significantly lowered from 52 to about 28 minutes.

**Table 1** - **Process conditions**

| Example | | 1 | 1C | 2 | 2C |
|---|---|---|---|---|---|
| **PRECONTACT** | | | | | |
| Temperature | °C | 15,0 | 15,0 | 15,0 | 15,0 |
| Residence time | min | 12,2 | 11,7 | 12,0 | 12,0 |
| TEAL/catalyst | wt/wt | 9,1 | 10,0 | 6,0 | 6,0 |
| TEAL/external donor | g/g | 14,2 | 20,0 | 8,0 | 8,0 |
| **PREPOLYMERIZATION** | | | | | |
| Temperature | °C | 20,0 | 20,0 | 20,0 | 20,0 |
| Residence Time | min | 6,9 | 6,9 | 8,0 | 8,0 |

(continued)

| POLYMERIZATION - MZCR | | | | | |
|---|---|---|---|---|---|
| Temperature | °C | 68,5 | 73,0 | 65 | 75 |
| Riser gas dew point | °C | 67,0 | 67,0 | 63.1 | 63.5 |
| Pressure | bar-g | 28,0 | 28,0 | 30 | 30 |
| Liquid fraction in riser (*) | wt% | 4 | 0 | 3 | 0 |
| Solid velocity | REF=1 | 1,277 | 1,000 | 1,000 | 1,000 |
| Downcomer bottom inner temperature | °C | 80,0 | 86,0 | 79,3 | 86,9 |
| Downcomer bottom skin temperature | °C | 86,0 | 92,0 | 78,5 | 89,6 |
| Residence time | min | 62 | 60 | 130 | 131 |
| Production | REF=1 | 1 | 1 | 1 | 1 |
| Mileage | kg/g | 15 | 11,9 | 33.7 | 33.7 |
| $H_2/C_3^-$ riser/downcomer | mol/mol | 0.0007 | 0.0006 | 0.136 | 0.121 |
| POLYMERIZATION - GPR | | | | | |
| Temperature | °C | - | - | 80 | 80 |
| Pressure | bar-g | - | - | 18 | 18 |
| Level | % | - | - | 32,2 | 60.0 |
| $H_2/C_2^-$ | mol/mol | - | - | 0,039 | 0,034 |
| C2/(C2+C3) | mol/mol | - | - | 0,45 | 0,43 |
| Residence time | min | - | - | 28,4 | 52 |
| Overall production | REF=1 | - | - | 1 | 1 |
| Overall mileage | kg/g | - | - | 48,6 | 49,3 |
| GPR production split | % | - | - | 31 | 32 |
| Specific GPR mileage | kg/kg.h.bar | - | - | 1656 | 944 |
| Reactivity ratio (based on specific mileage) | -- | - | - | 2,31 | 1,38 |
| Notes: (*) calculated from bottom riser enthalpy balance; $C_2^-$ = ethylene; $C_3^-$ = propylene; $H_2$ = hydrogen; Split = amount of polymer prepared in the concerned reactor referred to the total weight. | | | | | |

**Table 2 - Polymer characterization**

| Example | | 1 | 1C | 2 | 2C |
|---|---|---|---|---|---|
| MFR (230°C/2.16kg) - homo | g/10' | 1.2 (**) | 1.27 (**) | 97 | 100 |
| MFR (230°C/2.16kg) - final polymer | g/10' | - | - | 16.6 | 17.2 |
| Ethylene units - final polymer | %wt | - | - | 15.3 | 15.5 |
| Ethylene units - rubber | %wt | - | - | 50 | 49 |
| XS - homo | % | 3.1 | 4.4 | 2.5 | 2.1 |
| XS - final polymer | % | - | - | 27.0 | 27.1 |
| XSIV | dl/g | n.m. | n.m. | 3.22 | 3.52 |
| Notes: (**) MFR (230°C/5kg) - homo; n.m. = not measured | | | | | |

**Claims**

1. A process for the polymerization of olefins in gas phase carried out in a reactor having two interconnected polymerization zones, a first zone named the "riser" and a second zone named the "downcomer", wherein the growing polymer particles:

> a) flow through the riser under fast fluidization conditions established by feeding a mixture of gas and liquid;
> b) leave the riser and enter the downcomer, through which they flow downward in a densified form;
> c) leave the downcomer and are reintroduced into the riser, thus establishing a circulation of polymer between the riser and the downcomer;

and wherein the reactor is operated at a temperature which is between 0°C and 5°C above the dew point of the riser gas at the operating pressure; and wherein further in the riser, besides the growing polymer particles and gas flow, an amount of liquid is also present.

2. The process according to claim 1, wherein an amount of liquid is present in the whole riser.

3. The process according to claim 1, wherein no liquid is present above 75% of the height of the riser.

4. The process according to claim 1, wherein no liquid is present above 50% of the height of the riser.

5. The process according to any of claims 1 to 4, wherein the pressure of operation of the reactor is comprised between 5 and 40 bar-g, preferably between 10 and 35 bar-g, more preferably between 20 and 30 bar-g.

6. The process according to any of claims 1 to 5, wherein the temperature of operation of the reactor is comprised between 40 and 120 °C, preferably between 45 and 100 °C, more preferably between 50 and 85 °C, still more preferably between 55 and 70 °C.

7. The process according to any of claims 1 to 6, wherein the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser.

8. The process according to claim 7, wherein one or more feeding lines for the barrier stream are placed in the downcomer close to the upper limit of the volume occupied by the polymer particles flowing downward in a densified form.

9. The process according to claim 7 or 8, wherein the barrier steam comprises propane.

10. The process according to claim 9, wherein the barrier steam comprises:

> i. from 10 to 100% by mol of propylene;
> ii. from 0 to 80% by mol of ethylene;
> iii. from 0 to 30% by mol of propane; and
> iv. from 0 to 5% by mol of hydrogen.

11. The process according to claim 10, wherein the composition of the barrier stream derives from condensation and/or distillation of part of a gaseous stream continuously recycled via a gas recycle line to the reactor having two interconnected polymerization zones.

12. The process according to any of the preceding claims, wherein flow rates of antistatic composition are fed into the reactor at the bottom of the riser or into the gas recycle line.

13. The process according to any of the preceding claims, wherein the reactor having two interconnected polymerization zones is placed upstream or downstream one or more other polymerization reactors based on conventional liquid- and/or gas-phase technologies, thus giving rise to a sequential multistage polymerization process.

14. The process according to any of the preceding claims, which is carried out in the presence of a Ziegler-Natta catalyst comprising:

> i. a solid catalyst component comprising Mg, Ti, an halogen and an electron donor compound denominated "internal donor",
ii. an alkylaluminum compound, and
iii. optionally, an electron-donor compound denominated "external donor".

**15.** The process according to claim 14, wherein the molar ratio of solid catalyst component to alkylaluminum compound introduced into the polymerization reactor is from 0.05 to 3.

## Patentansprüche

**1.** Verfahren zur Polymerisation von Olefinen in der Gasphase, das in einem Reaktor durchgeführt wird, der zwei miteinander verbundene Polymerisationszonen hat, eine erste Zone, die als das "Steigrohr" bezeichnet wird, und eine zweite Zone, die als das "Fallrohr" bezeichnet wird, wobei die wachsenden Polymerpartikel:

a) unter raschen Verwirbelungsbedingungen, die durch Einspeisen einer Mischung aus Gas und Flüssigkeit hergestellt werden, durch das Steigrohr fließen;
b) das Steigrohr verlassen und in das Fallrohr eintreten, durch das sie in einer verdichteten Form abwärts fließen;
c) das Fallrohr verlassen und erneut in das Steigrohr eingebracht werden, wodurch eine Zirkulation von Polymer zwischen dem Steigrohr und dem Fallrohr hergestellt wird;

und wobei der Reaktor bei einer Temperatur betrieben wird, die zwischen 0 °C und 5 °C über dem Taupunkt des Steigrohrgases bei dem Betriebsdruck liegt; und wobei des Weiteren in dem Steigrohr, abgesehen von den wachsenden Polymerpartikeln und dem Gasfluss, auch eine Menge an Flüssigkeit vorhanden ist.

**2.** Verfahren nach Anspruch 1, wobei in dem gesamten Steigrohr eine Menge an Flüssigkeit vorhanden ist.

**3.** Verfahren nach Anspruch 1, wobei oberhalb von 75 % der Höhe des Steigrohrs keine Flüssigkeit vorhanden ist.

**4.** Verfahren nach Anspruch 1, wobei oberhalb von 50 % der Höhe des Steigrohrs keine Flüssigkeit vorhanden ist.

**5.** Verfahren nach einem der Ansprüche 1 bis 4, wobei der Betriebsdruck des Reaktors zwischen 5 und 40 bar-g, vorzugsweise zwischen 10 und 35 bar-g, bevorzugter zwischen 20 und 30 bar-g liegt.

**6.** Verfahren nach einem der Ansprüche 1 bis 5, wobei die Betriebstemperatur des Reaktors zwischen 40 und 120 °C, vorzugsweise zwischen 45 und 100 °C, bevorzugter zwischen 50 und 85 °C, noch bevorzugter zwischen 55 und 70 °C liegt.

**7.** Verfahren nach einem der Ansprüche 1 bis 6, wobei die zwei miteinander verbundenen Polymerisationszonen in einer solchen Weise betrieben werden, dass die von dem Steigrohr kommende Gasmischung ganz oder teilweise daran gehindert wird, in das Fallrohr einzutreten, indem ein Flüssig- und/oder Gasstrom, der als "Barrierestrom" bezeichnet wird und eine Zusammensetzung hat, die sich von der in dem Steigrohr vorhandenen gasförmigen Mischung unterscheidet, in den oberen Teil des Fallrohrs eingebracht wird.

**8.** Verfahren nach Anspruch 7, wobei eine oder mehrere Speiseleitungen für den Barrierestrom in dem Fallrohr nahe an der Obergrenze des Volumens, das durch die Polymerpartikel in Anspruch genommen wird, die in einer verdichteten Form abwärts fließen, platziert wird/werden.

**9.** Verfahren nach Anspruch 7 oder 8, wobei der Barrierestrom Propan umfasst.

**10.** Verfahren nach Anspruch 9, wobei der Barrierestrom umfasst:

i. 10 bis 100 Mol.% Propylen;
ii. 0 bis 80 Mol.% Ethylen;
iii. 0 bis 30 Mol.% Propan; und
iv. 0 bis 5 Mol.% Wasserstoff.

**11.** Verfahren nach Anspruch 10, wobei die Zusammensetzung des Barrierestroms aus der Kondensation und/oder Destillation eines Teils eines gasförmigen Stroms abgeleitet wird, der kontinuierlich über eine Gasrecyclingleitung in den Reaktor, der zwei miteinander verbundene Polymerisationszonen aufweist, recycelt wird.

12. Verfahren nach einem der vorhergehenden Ansprüche, wobei Flussraten von Antistatikzusammensetzung am Boden des Steigrohrs oder in die Gasrecyclingleitung eingespeist werden.

13. Verfahren nach einem der vorhergehenden Ansprüche, wobei der Reaktor, der zwei miteinander verbundene Polymerisationszonen aufweist, stromaufwärts oder stromabwärts von einem oder mehreren anderen Polymerisationsreaktoren platziert wird, der/die auf konventionellen Flüssig- und/oder Gasphasentechnologien basiert/basieren, wodurch ein sequentielles mehrstufiges Polymerisationsverfahren herbeigeführt wird.

14. Verfahren nach einem der vorhergehenden Ansprüche, das in Gegenwart eines Ziegler-Natta-Katalysators durchgeführt wird, umfassend:

   i. eine feste Katalysatorkomponente, umfassend Mg, Ti, ein Halogen und eine Elektronendonorverbindung, die als "interner Donor" bezeichnet wird,
   ii. eine Alkylaluminiumverbindung und
   iii. gegebenenfalls eine Elektronendonorverbindung, die als "externer Donor" bezeichnet wird.

15. Verfahren nach Anspruch 14, wobei das Molverhältnis von fester Katalysatorkomponente zu Alkylaluminiumverbindung, die in den Polymerisationsreaktor eingebracht werden, 0,05 bis 3 beträgt.


**Revendications**

1. Procédé de polymérisation d'oléfines en phase gazeuse mis en œuvre dans un réacteur présentant deux zones de polymérisation interconnectées, une première zone nommée la "colonne montante" et une seconde zone nommée la "colonne descendante" ; les particules polymères en croissance :

   a) s'écoulant à travers la colonne montante dans des conditions de fluidisation rapide établies par l'alimentation d'un mélange de gaz et de liquide ;
   b) quittant la colonne montante et entrant dans la colonne descendante, à travers laquelle elles s'écoulent vers le bas sous une forme densifiée ;
   c) quittant la colonne descendante et étant réintroduites dans la colonne montante, établissant ainsi une circulation de polymère entre la colonne montante et la colonne descendante ;

   et le réacteur fonctionnant à une température qui est située entre 0 °C et 5 °C au-dessus du point de rosée du gaz de colonne montante à la pression de fonctionnement et, en outre, une quantité de liquide étant également présente dans la colonne montante, en plus des particules polymères en croissance et de l'écoulement de gaz.

2. Procédé selon la revendication 1, une quantité de liquide étant présente dans l'ensemble de la colonne montante.

3. Procédé selon la revendication 1, aucun liquide n'étant présent au-dessus de 75 % de la hauteur de la colonne montante.

4. Procédé selon la revendication 1, aucun liquide n'étant présent au-dessus de 50 % de la hauteur de la colonne montante.

5. Procédé selon l'une quelconque des revendications 1 à 4, la pression de fonctionnement du réacteur étant comprise entre 5 et 40 bar-g, de préférence entre 10 et 35 bar-g, plus préférablement entre 20 et 30 bar-g.

6. Procédé selon l'une quelconque des revendications 1 à 5, la température de fonctionnement du réacteur étant comprise entre 40 et 120 °C, de préférence entre 45 et 100 °C, plus préférablement entre 50 et 85 °C, encore plus préférablement entre 55 et 70 °C.

7. Procédé selon l'une quelconque des revendications 1 à 6, les deux zones de polymérisation interconnectées fonctionnant de telle sorte que le mélange gazeux provenant de la colonne montante est totalement ou partiellement empêché d'entrer dans la colonne descendante par introduction, dans la partie supérieure de la colonne descendante, d'un flux de liquide et/ou de gaz, dénommé "flux formant une barrière", présentant une composition différente de celle du mélange gazeux présent dans la colonne montante.

8. Procédé selon la revendication 7, une ou plusieurs conduites d'alimentation pour le flux formant une barrière étant placées dans la colonne descendante à proximité de la limite supérieure du volume occupé par les particules polymères s'écoulant vers le bas sous une forme densifiée.

9. Procédé selon la revendication 7 ou 8, le flux formant une barrière comprenant du propane.

10. Procédé selon la revendication 9, le flux formant une barrière comprenant :

    i. 10 à 100 % en mole de propylène ;
    ii. 0 à 80 % en mole d'éthylène ;
    iii. 0 à 30 % en mole de propane ; et
    iv. 0 à 5 % en mole d'hydrogène.

11. Procédé selon la revendication 10, la composition du flux formant une barrière provenant de la condensation et/ou de la distillation d'une partie d'un flux gazeux recyclé en continu par l'intermédiaire d'une conduite de recyclage de gaz vers le réacteur présentant deux zones de polymérisation interconnectées.

12. Procédé selon l'une quelconque des revendications précédentes, des débits de composition antistatique étant alimentés dans le réacteur au fond de la colonne montante ou dans la conduite de recyclage de gaz.

13. Procédé selon l'une quelconque des revendications précédentes, le réacteur présentant deux zones de polymérisation interconnectées étant placé en amont ou en aval d'un ou de plusieurs autres réacteurs de polymérisation basé(s) sur des technologies classiques en phase liquide et/ou gazeuse, donnant ainsi lieu à un procédé de polymérisation en plusieurs étapes séquentielles.

14. Procédé selon l'une quelconque des revendications précédentes, qui est mis en œuvre en présence d'un catalyseur Ziegler-Natta comprenant :

    i. un constituant catalytique solide comprenant Mg, Ti, halogène et un composé donneur d'électrons dénommé "donneur interne",
    ii. un composé d'alkylaluminium et
    iii. éventuellement, un composé donneur d'électrons dénommé "donneur externe".

15. Procédé selon la revendication 14, le rapport molaire du constituant catalytique solide au composé d'alkylaluminium introduit dans le réacteur de polymérisation étant de 0,05 à 3.

Fig. 1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009149610 A1
- US 2011184131 A1
- US 2011152424 A1
- EP 1012195 B1
- WO 2009080660 A
- EP 2281010 A1
- EP 1720913 A1
- WO 2018177701 A1
- WO 2006067052 A1
- WO 2012031986 A
- WO 2011029735 A
- EP 1012195 A1
- EP 728769 B1
- EP 782587 A

**Non-patent literature cited in the description**

- **D. GELDART**. Gas Fluidisation Technology. J. Wiley & Sons Ltd, 1986, 155
- **C. J. CARMAN** ; **R. A. HARRINGTON** ; **C. E. WILKES**. Monomer Sequence Distribution in Ethylene-Propylene Rubber Measured by C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with δ-titanium trichloride-diethylaluminum chloride. *Macromolecules*, 1982, vol. 15, 1150